(19) **Europäisches Patentamt**
**European Patent Office**
**Office européen des brevets**

(11) **EP 4 599 219 B1**

(12) **EUROPÄISCHE PATENTSCHRIFT**

(45) Veröffentlichungstag und Bekanntmachung des Hinweises auf die Patenterteilung:
**08.04.2026  Patentblatt 2026/15**

(21) Anmeldenummer: **23772148.5**

(22) Anmeldetag: **12.09.2023**

(51) Internationale Patentklassifikation (IPC):
*G01H 1/00* *(2006.01)*        *B21B 38/00* *(2006.01)*

(52) Gemeinsame Patentklassifikation (CPC):
**G01H 1/003; B21B 38/008**

(86) Internationale Anmeldenummer:
**PCT/EP2023/074954**

(87) Internationale Veröffentlichungsnummer:
**WO 2024/074265 (11.04.2024 Gazette 2024/15)**

(54) **VERFAHREN ZUM ANALYSIEREN DES SCHWINGUNGSVERHALTENS EINES SYSTEMS**

METHOD FOR ANALYSING THE VIBRATION BEHAVIOUR OF A SYSTEM

PROCÉDÉ D'ANALYSE DU COMPORTEMENT VIBRATOIRE D'UN SYSTÈME

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **06.10.2022  DE 102022210596**

(43) Veröffentlichungstag der Anmeldung:
**13.08.2025  Patentblatt 2025/33**

(73) Patentinhaber: **SMS Group GmbH**
**41069 Mönchengladbach (DE)**

(72) Erfinder:
• **KLANKE, Stefan**
**40470 Düsseldorf (DE)**
• **KRÜGER, Matthias**
**24375 Kappéln (DE)**
• **RICHARD, Sebastian**
**57271 Hilchenbach (DE)**

(74) Vertreter: **Hemmerich & Kollegen**
**Hammerstraße 2**
**57072 Siegen (DE)**

(56) Entgegenhaltungen:
**EP-A1- 3 903 953     EP-B1- 0 638 375**

• **VAIDYA VIVEK ANIL ET AL: "Analysis of Causes and Remedy of Chattering in the Aluminum Four stand Tandem Cold Rolling Mill: A Case Study", JOURNAL OF THE INSTITUTION OF ENGINEERS (INDIA): SERIES C, SPRINGER INDIA, INDIA, vol. 103, no. 1, 23 September 2021 (2021-09-23), pages 107 - 119, XP037709586, ISSN: 2250-0545, [retrieved on 20210923], DOI: 10.1007/ S40032-021-00773-W**
• **NIROOMAND MOHAMMAD REZA ET AL: "811. Frequency analysis of chatter vibrations in tandem rolling mills", 14 May 2012 (2012-05-14), pages 852 - 865, XP093106415, Retrieved from the Internet <URL:https://core.ac.uk/download/ pdf/323313225.pdf> [retrieved on 20231128]**
• **KIMURA YUKIO ET AL: "Analysis of Chatter in Tandem Cold Rolling Mills", ISIJ INTERNATIONAL, 9 September 2022 (2022-09-09), pages 77 - 84, XP093106414, Retrieved from the Internet <URL:https://www. jstage.jst.go.jp/article/isijinternational1989/43/1/ 43_1_77/_pdf> [retrieved on 20231128]**

EP 4 599 219 B1

**Beschreibung**

Die Erfindung betrifft ein Verfahren zum Analysieren des Schwingungsverhaltens von einem System, bestehend aus mindestens einem ersten und einem zweiten Walzgerüst, die über ein in beide Walzgerüste eingespanntes Band, z.B. aus Metall, miteinander gekoppelt sind.

Zum technologischen Hintergrund

Im Kern geht es bei der vorliegenden Erfindung um ein besonderes Schwingungsverhalten von Walzgerüsten, das auch als Rattern, im Englischen als "Chattern" bezeichnet wird.

Der Begriff "Chattern" bezeichnet ausgeprägte Vibrationen, die beim Walzen von Stahl- oder Aluminiumbändern auftreten können. Das Phänomen ist sowohl bei Warmband- als auch Kaltbandanlagen, und weiterhin sowohl bei einzelnen Walzgerüsten als auch mehrgerüstigen Walzstraßen bekannt. Besonders kritisch ist Chattern beim Kaltwalzen von meist dünnen Bändern. Charakteristisch sind hierbei die sog. 3rd Octave und 5th Octave Chatterschwingungen, die nach der Lage der Schwingungsfrequenz in der jeweiligen musikalischen Oktavlage (3. Oktave: 110 - 220 Hz, 5. Oktave: 440 - 880 Hz) benannt sind. Je nach Vibrationsstärke reichen die dabei entstehenden Probleme von Qualitätseinbußen an den Walzprodukten, z.B. Dicke oder Oberfläche, über die Beschädigung von Bauteilen, z.B. Markierungen auf Walzen oder Lagern, bis zum Bandriss. Ein Bandriss bedeutet Produktionsausfall, ggf. Folgeschäden an Anlagen und Personal.

Stand der Technik

Im Stand der Technik ist es bekannt, einem Rattern von Walzgerüsten vorzubeugen, indem eine geeignete Dämpfung vorgesehen wird. Mit oder ohne Dämpfung kann es insbesondere bei Systemen, die aus mindestens zwei miteinander gekoppelten Walzgerüsten bestehen, zu unerwünschten Ratterereignissen kommen. Diese gilt es zu detektieren bzw. rechtzeitig davor zu warnen.

Der Fachaufsatz von Niroomand Mohammad Reza ET AL: "811. Frequency analysis of chatter vibrations in tandem rolling mills", 14. Mai 2012 (2012-05-14), Seiten 852-865, XP093106415, gefunden im Internet: URL:https://core. ac.uk/download/pdf/323313225.pdf betrifft die Analyse des Schwingungsverhaltens von einzelnen Komponenten eines Walzgerüstes.

Die Europäische Patentanmeldung EP 3 903 953 A1 beschreibt ein Verfahren zum Erkennen von Rattern bei einem Kaltwalzgerüst. Konkret wird bei diesem Verfahren vorgeschlagen, Schwingungen an dem Kaltwalzgerüst mit Hilfe eines Sensors im Zeitbereich zu erfassen und dieses Zeitsignal dann nachfolgend in den Frequenzbereich zu transformieren und dort zu analysieren. Konkret sieht das Verfahren das Erkennen eines Ratterereignisses für den Fall vor, dass ein Peak im Amplituden-Spektrum des Signals einen vorgegebenen Schwellenwert überschreitet.

Der Fachaufsatz von Vaidya Vivek Anil Et Al: "Analysis of Causes and Remedy of Chattering in the Aluminum Four stand Tandem Cold Rolling Mill: A Case Study", JOURNAL OF THE INSTITUTION OF ENGINEERS (INDIA): SERIES C, SPRINGER INDIA, INDIA, Bd. 103, Nr. 1, 23. September 2021 (2021-09-23), Seiten 107-119, XP037709586, ISSN: 2250-0545, DOI: 10.1007/S40032-021-00773-W offenbart ein Verfahren gemäß dem Oberbegriff des Patentanspruchs 1.

Der Erfindung liegt die Aufgabe zugrunde, ein bekanntes Verfahren zum Analysieren des Schwingungsverhaltens von einem System im Hinblick auf das Auftreten von kritischen Aufschwingsituationen (Ratterereignissen) dahingehend weiterzubilden, dass es für Systeme mit mehreren, miteinander gekoppelten Walzgerüsten vorteilhaft anwendbar wird.

Diese Aufgabe wird durch das Verfahren gemäß dem Patentanspruch 1 gelöst. Demnach wird ein Ratterereignis für ein System aus mindestens zwei gekoppelten Walzgerüsten dann detektiert, wenn zwei Bedingungen gleichzeitig erfüllt sind:

Erstens muss es einen ersten Peak im ersten Amplituden-Spektrum und mindestens einen zweiten Peak in dem zweiten Amplituden-Spektrum geben, die beide in einem gemeinsamen Frequenzbereich liegen (Verfahrensschritte e) und f)), und zweitens muss zusätzlich der erste Peak einen vorgegebenen ersten Amplituden-Schwellenwert und der zweite Peak einen zweiten vorgegebenen Amplituden-Schwellenwert überschreiten (Verfahrensschritt g)). Erst wenn mindestens diese beiden Bedingungen erfüllt sind, wird das Ratterereignis gemäß der vorliegenden Erfindung sicher detektiert. Der erste und der zweite Amplituden-Schwellenwert können gleich oder unterschiedlich sein.

Die Begriffe "Spektrum" und "Amplituden-Spektrum" werden synonym verwendet.

Die abhängigen Ansprüche definieren verschiedene Konstellationen bzw. Ausführungsbeispiele, bei denen die beiden Prüfkriterien gemäß Verfahrensschritt f) und gemäß Verfahrensschritt g) nur teilweise erfüllt sind. In diesen Fällen ist das Ratterereignis zwar noch nicht sicher detektierbar; es werden allerdings Trends, d.h. zeitliche Entwicklungen in der Amplitude oder der Frequenz der Peaks in den Amplitudenspektren dahingehend beobachtet, ob sie sich zu einer Erfüllung der beiden Bedingungen gemäß Verfahrensschritt f) und gemäß Verfahrensschritt g) hin entwickeln. In diesen Fällen sieht die vorliegende Erfindung vor, dass Vorwarnungen ausgegeben werden.

Gemäß einem weiteren Ausführungsbeispiel der Erfindung kann die Detektion des Ratterereignisses oder die rechtzeitige Vorwarnung davor an eine zusätzliche Bedingung geknüpft werden, beispielsweise dass - die Korrelation der beiden Signale im Zeitabschnitt oberhalb des Korrelations-Schwellenwertes liegt; und/oder

- die Eigenfrequenzen des ersten und/oder des zweiten Walzgerüstes innerhalb des gemeinsamen Frequenzbereichs und vorzugsweise auch innerhalb des weiteren (engeren) gemeinsamen Frequenzbereiches liegen; und/oder
- die Frequenz des ersten Peaks und die Frequenz des zweiten Peaks innerhalb eines weiteren gemeinsamen Frequenzbereichs liegen, der enger als der gemeinsame Frequenzbereich ist; und/oder
- ein Amplituden-Gradient, ermittelt gemäß der Formel

$$\text{grad } Pn = (Pn(t_2) - Pn(t_1))/\Delta t \tag{1}$$

für das erste Walzgerüst n=1 oberhalb eines individuellen Gradienten-Schwellenwertes liegt, wobei gilt:

n        Walzgerüst
t1, t2     Zeitabschnitt 1, Zeitabschnitt 2
$\Delta t$       Zeitdifferenz t2-t1 = const.
Pn      Amplitude des Peaks für das Walzgerüst n1

und entweder die Amplitude der Peaks des Amplitudenspektrums des zweiten Walzgerüstes bereits während der Zeitabschnitte 1, 2 und 3 über dem zugehörigen Amplituden-Schwellenwert gelegen haben oder liegen, oder auch der Gradient für das zweite Walzgerüst gemäß der Formel ebenfalls oberhalb eines individuellen Gradienten-Schwellenwertes liegt.

Alle diese Kriterien ermöglichen jeweils eine Bewertung der Ähnlichkeit des ersten und des zweiten Amplituden-Spektrums. Je ähnlicher die beiden Spektren sind, desto zuverlässiger ist das Ratterereignis vorhersehbar oder detektierbar.

Gemäß einem weiteren Ausführungsbeispiel wird das erste und/oder das zweite Amplituden-Spektrum vor der Durchführung eines der Prüf- und/oder eines der Vergleichsschritte im Frequenzbereich interpoliert. Diese Interpolation ermöglicht eine präzisere Ermittlung des Höchstwertes eines Peaks sowie auch eine genauere Ermittlung von dessen Frequenz. Auch diese genauere Bestimmung der Amplitude und der Frequenz eines Peaks ermöglichen wiederum eine verbesserte Vorhersage oder Detektion des Ratterereignisses.

Die Detektion des Ratterereignisses und/oder zumindest eine der Vorwarnungen davor wird vorzugsweise an eine Bedienperson des Systems oder an eine automatische Prozesssteuerung des Systems ausgegeben. Die Information über die Detektion oder die Vorwarnung kann beispielsweise mit der Empfehlung verknüpft sein, das System abzubremsen, um ein Aufschaukeln von Schwingungen, d.h. unerwünschte Resonanzeffekte zu verhindern.

Das erfindungsgemäße Verfahren kann Anwendung finden sowohl bei Kaltwalzgerüsten als auch bei Warmwalzgerüsten.

Die in der vorliegenden Beschreibung erwähnten verschiedenen Vorgehensweisen zur Detektion eines Ratterereignisses oder zum Generieren einer entsprechenden Vorwarnung können beliebig miteinander kombiniert werden, um die Genauigkeit der Vorhersage zu erhöhen. Vorteilhafterweise sieht die vorliegende Erfindung eine gleichzeitige Nutzung mehrerer unterschiedlicher Signale und Kriterien - optional auch in Kombination - vor zur Vermeidung von Fehlauslösungen bei gleichzeitiger Absenkung von Warnschwellen.

Die oben genannte Aufgabe der Erfindung wird weiterhin gelöst durch ein Computerprogrammprodukt gemäß Patentanspruch 10. Die Vorteile dieser Lösung entsprechen den oben mit Bezug auf das beanspruchte Verfahren genannten Vorteilen.

Bei dem ersten und/oder dem zweiten Sensor kann es sich um bereits in den Walzgerüsten vorhandene Messtechnik in den Walzgerüsten, wie z.B. Druckaufnehmer in den Anstell- und Biegezylindern, Kraftmessdosen oder außerhalb der Walzgerüste in Form von Dickenmessgeräten für das Metallband handeln. Auch für die Analyse dieser Messsignale kann bereits Gerätschaft vorhanden sein, die dann nicht zusätzlich angeschafft werden muss. Wenn diese Sensoren zur Durchführung des erfindungsgemäßen Verfahrens verwendet werden, hat dies den Vorteil, dass damit keine Zusatzkosten verbunden sind. Wenn zusätzlich zu diesen Sensoren auch andere Sensoren verwendet werden zur Durchführung des erfindungsgemäßen Verfahrens, so wird dadurch eine Steigerung der Genauigkeit, wiederum ohne Zusatzkosten, realisiert. Solche zusätzlichen Sensoren und Messtechnik zur Erfassung der zeitlichen Schwingungssignale können z.B. im Zwischengerüstbereich, d.h. zwischen dem ersten und dem zweiten Walzgerüst angeordnet sein. Bei den zusätzlichen Sensoren kann es sich beispielsweise um Zugmessdosen oder Beschleunigungssensoren handeln.

Diese zusätzliche Messtechnik ist eventuell mit Zusatzkosten verbunden.

Bei Durchführung des erfindungsgemäßen Verfahrens bei einem System mit aktiver Schwingungsdämpfung in einem Walzgerüst werden in diesem Gerüst Schwingungen unterdrückt. D.h., die Amplituden der Peaks sind mitunter gering und die Frequenzen der Peaks sind nicht immer erkennbar. D.h., das Erfassen der Schwingungen an dem jeweiligen Gerüst, wie es zur Durchführung des erfindungsgemäßen Verfahrens erforderlich ist, ist dann nicht ohne weiteres möglich. Abhilfe kann in diesem Fall das Einbeziehen von vorliegenden Informationen aus dem aktiven Schwingungsdämpfungssystem, wie beispielsweise dem Stellsignal des Systems und dessen Spektralanalyse, bringen.

Der erste und der zweite Sensor zur Erfassung der Schwingungen an dem ersten und zweiten Walzgerüst müssen nicht zwangsläufig immer unmittelbar an dem Gerüst angebracht sein. Für die Durchführung des erfindungsgemäßen Verfahrens ist es ausreichend, wenn diese Sensoren jeweils ein Signal generieren, das die Schwingungen an den Walzgerüsten repräsentiert, bzw. aus dem die Schwingungen an den Walzgerüsten ableitbar sind.

Der Beschreibung sind insgesamt 14 Figuren beigefügt, wobei

Fig. 1 eine schematische Darstellung des erfindungsgemäßen Verfahrens in Form eines Flussdiagramms;

Fig. 2 die Veranschaulichung der Transformation von Zeitsignalen in den Frequenzbereich;

Fig. 3 + 4 das Auffinden bzw. Festlegen eines gemeinsamen Frequenzbereichs für ein erstes und ein zweites Amplituden-Spektrum;

Fig. 5 + 6 die Verwendung einer Korrelation des ersten und des zweiten Amplituden-Spektrums zum Verifizieren von deren Ähnlichkeit;

Fig. 7 die Beobachtung eines Anstiegs der Amplitude des ersten Peaks über der Zeit als Kriterium für die Ausgabe einer Vorwarnung auf ein drohendes Ratterereignis;

Fig. 8 die Beobachtung eines Anstiegs der Amplitude des zweiten Peaks als Vorwarnung für das Eintreten eines drohenden Ratterereignisses;

Fig. 9 die Beobachtung eines Anstiegs der Amplituden von sowohl dem ersten Peak wie auch dem zweiten Peak als Szenario für ein drohendes Ratterereignis;

Fig. 10 die Beobachtung einer Verschiebung der Frequenz des zweiten Peaks im Laufe der Zeit in den gemeinsamen Frequenzbereich hinein als drohendes Szenario für ein eventuelles Ratterereignis;

Fig. 11 eine Interpolation des Spektrums eines Signals im Frequenzbereich zur Verbesserung der Auflösung des Höchstwertes der Amplitude und/oder der Frequenz eines Peaks;

Fig. 12 die zusätzliche Auswertung der Nähe der Frequenz eines Peaks zu relevanten Eigenfrequenzen der jeweiligen Walzgerüste als weiteres Kriterium für die Detektion eines Ratterereignisses; und

Fig. 13+14 die zusätzliche Auswertung eines Gradienten von Peak-Amplituden in dem Amplitudenspektrum von mindestens einem Walzgerüst als weiteres Kriterium für die Detektion eines Ratterereignisses

veranschaulicht.

Die Erfindung wird nachfolgend unter Bezugnahme auf die genannten Figuren in Form von Ausführungsbeispielen detailliert beschrieben. In allen Figuren sind gleiche technische Elemente mit gleichen Bezugszeichen bezeichnet.

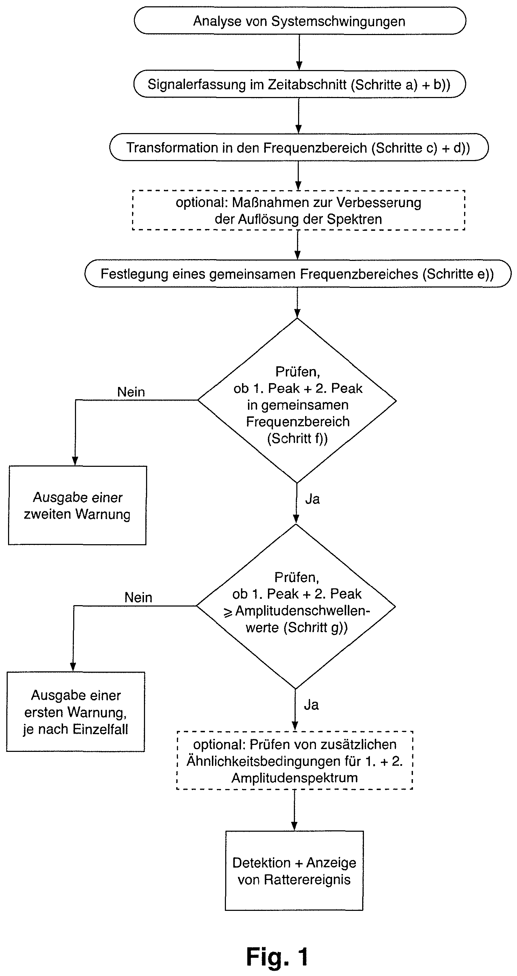

Fig. 1 veranschaulicht das erfindungsgemäße Verfahren zum Analysieren des Schwingungsverhaltens von einem System, bestehend aus mindestens einem ersten und einem zweiten Walzgerüst, die beide durch ein eingespanntes Band, insbesondere ein Metallband, miteinander gekoppelt sind. Das Verfahren weist folgende Schritte auf: a) Erfassen der Schwingungen an dem ersten Walzgerüst n mit einem ersten Sensor in Form eines ersten zeitlichen Schwingungssignals; und b) Erfassen der Schwingungen an dem zweiten Walzgerüst n+1 mit einem zweiten Sensor in Form eines zweiten zeitlichen Schwingungssignals, zeitgleich mit der Erfassung der Schwingungen an dem ersten Walzgerüst. Das zweite Walzgerüst n+1 ist dem ersten Walzgerüst n in Walzrichtung des Bandes nachgeordnet. Wie zuvor im allgemeinen Teil der Beschreibung erwähnt, müssen die Sensoren zur Erfassung der Schwingungen im Zeitbereich, insbesondere in einem Zeitabschnitt, nicht zwingend notwendig an den Walzgerüsten selber angebracht sein; vielmehr genügt es, wenn die Sensoren jeweils ein Signal in einem Zeitabschnitt generieren, welches die Schwingungen an dem jeweiligen Walzgerüst repräsentiert.

Nach dieser Signalerfassung im Zeitbereich werden die zeitlichen Sensorsignale in den Frequenzbereich transformiert, typischerweise mit Hilfe einer Fourier-Transformation; siehe die Verfahrensschritte c) und d) im Anspruch 1.

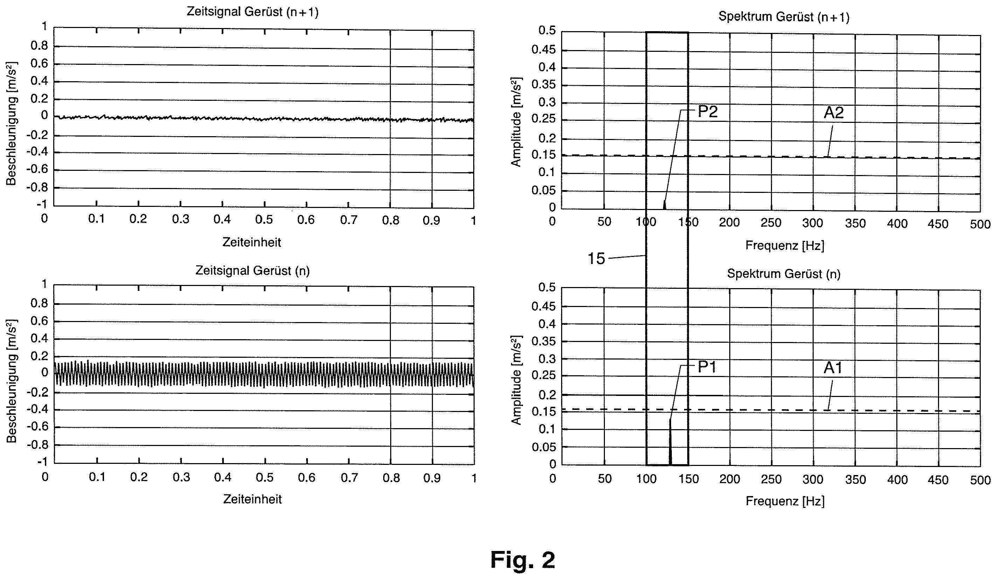

Figur 2 veranschaulicht diese Transformation von Schwingungssignalen aus dem Zeitbereich in den Frequenzbereich. Konkret zeigt die Abbildung links unten in Fig. 2 das Schwingungsverhalten eines Walzgerüstes n in einem Zeitabschnitt und rechts daneben ist das zugehörige Amplituden-Spektrum zu erkennen. Das Amplituden-Spektrum weist hier beispielhaft bzw. idealisiert lediglich einen ersten Peak P1 auf, dessen Amplitude hier, wiederum beispielhaft, unterhalb eines vorgegebenen ersten Amplituden-Schwellenwertes A1 liegt. Links oben in Figur 2 ist, wiederum beispielhaft, das zeitliche Signal gezeigt, welches das Schwingungsverhalten des zu dem Walzgerüst n nachgeordneten zweiten Walzgerüstes n+1 zeigt. Rechts daneben ist wieder das zugehörige Amplituden-Spektrum nach einer erfolgten Fourier-Transformation zu sehen. Dieses Amplituden-Spektrum besteht, wiederum idealisiert dargestellt, lediglich aus einem einzigen Peak P2, dessen Amplitude offensichtlich kleiner ist als ein zugehöriger zweiter Amplituden-Schwellenwert A2. Der erste Amplituden-Schwellenwert A1 und der zweite Amplituden-Schwellenwert A2 können gleich sein, sie müssen jedoch nicht gleich sein. Weiterhin ist für die beiden Amplituden-Spektren ein gemeinsamer Frequenzbereich 15 definiert, in dem die jeweiligen Peaks miteinander verglichen werden sollen.

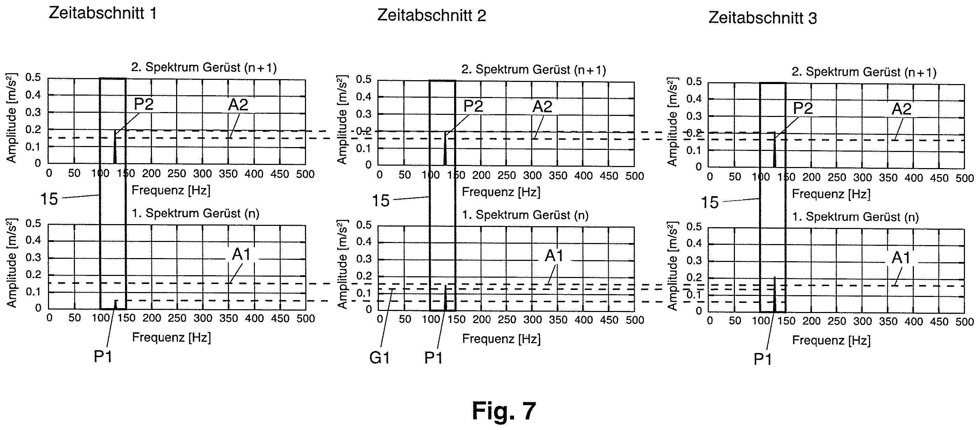

Die Festlegung des gemeinsamen Frequenzbereichs 15 erfolgt gemäß Fig. 1 und Anspruch 1 in Verfahrensschritt e). Ein nachfolgender erster Prüfschritt f) fragt, ob der erste Peak P1 und der zweite Peak P2 jeweils beide in dem gemeinsamen Frequenzbereich 15 liegen; dieser Prüfschritt ist bei dem in Fig. 2 gezeigten Beispiel zu bejahen. Der Höchstwert bzw. die Amplitude des ersten Peaks P1 liegt jedoch unter dem zugehörigen ersten Amplituden-Schwellenwert A1 und der Höchstwert bzw. die Amplitude des zweiten Peaks P2 liegt deutlich unter ihrem zugehörigen zweiten Amplituden-Schwellenwert A2; ein zweiter Prüfschritt g) ist deshalb zu verneinen. Insofern ist Figur 2 ein Beispiel dafür, dass gemäß dem erfindungsgemäßen Verfahren kein Rattereignis detektiert wird. Das weitere Vorgehen in diesem Fall wird weiter unten unter Bezugnahme auf die Figuren 7 - 9 sowie die Figuren 13 und 14 näher beschrieben.

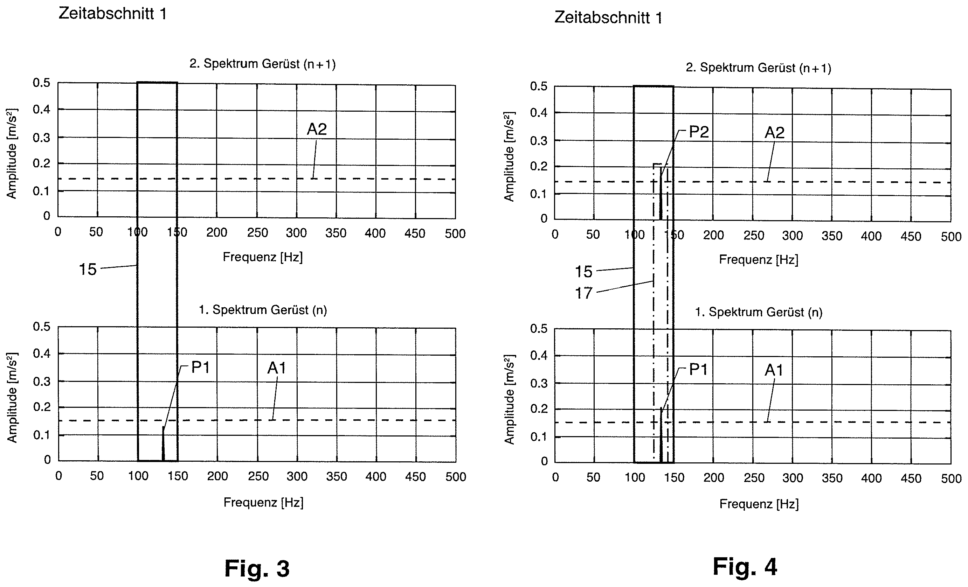

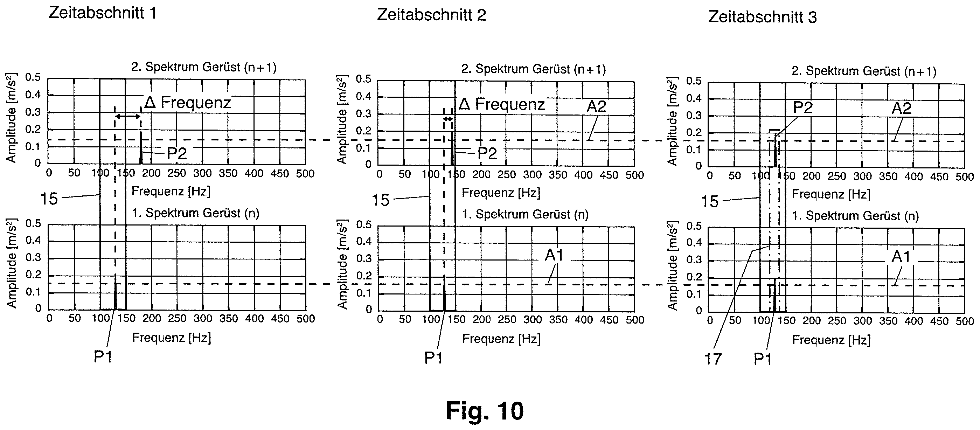

Fig. 3 zeigt ein anderes Beispiel dafür, dass gemäß dem erfindungsgemäßen Verfahren kein Rattereignis detektiert wird. Bei diesem Beispiel scheitert die Detektion daran, dass in dem festgelegten gemeinsamen Frequenzbereich 15 lediglich der erste Peak P1 des ersten Amplituden-Spektrums zu erkennen ist; siehe untere Abbildung. Jedoch ist kein zweiter Peak P2 des zweiten Amplituden-Spektrums in dem gemeinsamen Frequenzbereich 15 erkennbar; siehe die obere Abbildung von Fig. 3. Der 1. Prüfschritt f) ist deshalb hier schon nicht erfüllt. Das weitere Vorgehen in diesem Fall wird weiter unter Bezugnahme auf Fig. 10 beschrieben.

Fig. 4 zeigt schließlich den Fall, dass ein Rattereignis gemäß dem erfindungsgemäßen Verfahren detektiert wird. Wie in Fig. 4 zu erkennen ist, ist dies insbesondere dann gegeben, wenn die zwei folgenden Bedingungen erfüllt sind:

1. Es gibt einen gemeinsamen Frequenzbereich 15, in dem sowohl ein erster Peak des ersten Amplituden-Spektrums (untere Abbildung) und ein zweiter Peak des zweiten Amplituden-Spektrums (siehe obere Abbildung in Fig. 4) liegen; siehe Prüfschritt f). Darüber hinaus ist als zweite Bedingung der 2. Prüfschritt g) erfüllt, nämlich dass sowohl der Höchstwert des ersten Peaks P1 des ersten Amplituden-Spektrums über seinem zugehörigen Amplituden-Schwellenwert A1 liegt, wie auch dass der Höchstwert des zweiten Peaks P2 oberhalb seines zugehörigen Amplituden-Schwellenwertes A2 liegt.

Fig. 4 veranschaulicht eine weitere Bedingung, die jedoch für die Detektion des Rattereignisses nicht zwingend, sondern lediglich optional ist. Diese Bedingung besteht darin, dass die Frequenzen des ersten Peaks P1 und des zweiten Peaks P2 nicht nur beide innerhalb des gemeinsamen Frequenzbereiches 15 liegen, sondern auch zusätzlich innerhalb eines weiteren Frequenzbereiches 17 liegen, der nochmals enger ist als der gemeinsame Frequenzbereich 15. Das Vorliegen dieser Bedingung indiziert eine hinreichende Übereinstimmung zwischen den beiden Spektren und untermauert gegebenenfalls die Detektion des Rattereignisses.

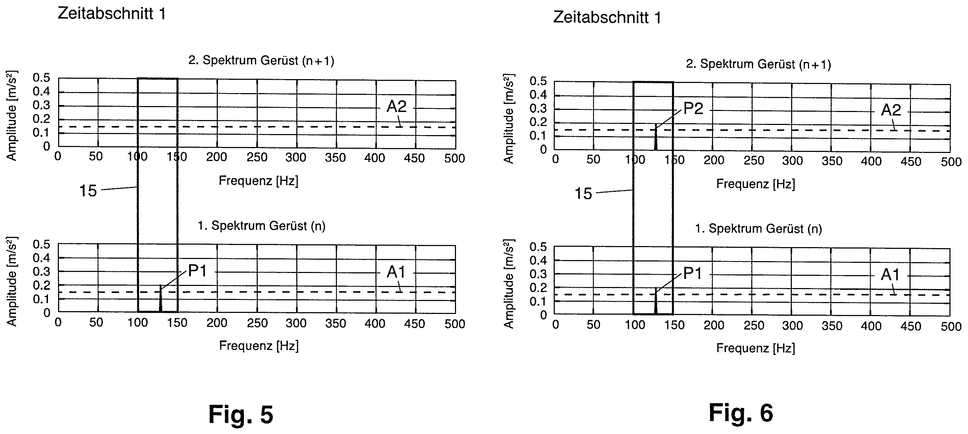

Die Figuren 5 und 6 bestehen jeweils aus zwei übereinander angeordneten Abbildungen. Die beiden übereinander angeordneten Abbildungen entsprechen jeweils im Wesentlichen den Figuren 3 und 4, abgesehen von dem weiteren gemeinsamen Frequenzbereich 17, der in den Figuren 5 und 6 nicht eingezeichnet ist.

In Fig. 5 ist zu erkennen, dass in dem ersten unteren Amplituden-Spektrum der Höchstwert des ersten Peaks P1 über seinem zugehörigen ersten Amplituden-Schwellenwert A1 liegt. Von dem oberen zweiten Amplituden-Spektrum für das benachbarte Walzgerüst n+1 liegt kein Peak innerhalb des gemeinsamen Frequenzbereichs 15. Das entspricht einer maximalen Unähnlichkeit der beiden Spektren in dem gemeinsamen Frequenzbereich. Das Korrelationsmaß, das die Ähnlichkeit der übereinander angeordneten Amplituden-Spektren veranschaulicht, liegt hier bei Null, und damit unterhalb eines evtl. vorgegebenen Korrelations-Schwellenwertes. Bei dem Beispiel gemäß Fig. 5 sind die Prüfschritte f) und g) nicht erfüllt und zusätzlich ist auch das optionale Korrelationskriterium, wonach die Korrelation der beiden Signale im Zeitabschnitt 1 oberhalb des Korrelations-Schwellenwertes liegen muss, nicht erfüllt.

Das in Fig. 6 gezeigte Ausführungsbeispiel unterscheidet sich von dem in dem Fig. 5 gezeigten Ausführungsbeispiel lediglich dadurch, dass in diesem Fall der zweite Peak P2 des zweiten oberen Amplituden-Spektrums ebenfalls innerhalb des gemeinsamen Frequenzbereichs 15 liegt. In diesem Fall liegt eine maximale Ähnlichkeit der beiden Spektren vor, was sich in einem Korrelationsmaß bzw. Korrelationskoeffizienten von 1 ausdrückt. Dieses Korrelationsmaß liegt oberhalb des Korrelations-Schwellenwertes KO und bestätigt damit die Detektion eines Ratterereignisses, wie es grundsätzlich durch das Vorhandensein des ersten Peaks P1 und des zweiten Peaks P2 jeweils innerhalb des gemeinsamen Frequenzbereichs 15 und jeweils oberhalb ihrer zugehörigen Amplituden-Schwellenwerte A1 und A2 gegeben ist. Sowohl die Prüfschritte f) und g) wie auch das optionale Korrelationskriterium sind erfüllt.

Die zuvor unter Bezugnahme auf die Fig. 2-6 beschriebenen Kriterien für eine große Ähnlichkeit des ersten und des zweiten Amplituden-Spektrums zueinander, sind lediglich optionale Bedingungen, die vorzugsweise neben den Prüfschritten f) und g) ebenfalls erfüllt sein sollten, um ein Ratterereignis sicher zu detektieren. Wenn einzelne dieser Bedingungen keine starke Ähnlichkeit des ersten und des zweiten Amplituden-Spektrums zueinander anzeigen, ist die Detektion des Ratterereignisses mit einer größeren Unsicherheit bzw. Unschärfe verbunden, als wenn eine große Ähnlichkeit vorliegt. Dasselbe gilt für die im Rahmen des erfindungsgemäßen Verfahrens ausgesprochene Vorwarnungen für das Eintreten eines Ratterereignisses in Zukunft.

Die Fig. 7-9 illustrieren drei Fallkonstellationen gemäß dem erfindungsgemäßen Verfahren gemäß Fig. 1, wobei der erste Prüfschritt f) jeweils erfüllt ist, d.h. der erste Peak des ersten Amplituden-Spektrums und der zweite Peak des zweiten Amplituden-Spektrums liegen immer in dem gemeinsamen Frequenzbereich 15. Der zweite Prüfschritt g) ist allerdings - zumindest zunächst - nicht erfüllt. Um auch in diesen Fällen eine Einschätzung dafür zu bekommen, ob ein Ratterereignis in Zukunft bevorsteht, ist es erforderlich, das erste Amplituden-Spektrum für das erste Walzgerüst n und das zweite Amplituden-Spektrum für das zweite Walzgerüst n+1 nicht nur für einen ersten Zeitabschnitt 1, sondern auch zumindest jeweils für einen zweiten Zeitabschnitt 2 zu erstellen. In die Fig. 7 - 9 sind jeweils drei Spektren für unterschiedliche Zeitabschnitte 1, 2 und 3 horizontal nebeneinander dargestellt. Diese Gegenüberstellung ermöglicht das Erkennen eines eventuellen Trends in der zeitlichen Entwicklung des ersten Peaks P1 und/oder des zweiten Peaks P2. Die Zeitabschnitte 1-3 in den Figuren 7 -10 und 13 - 14 bezeichnen jeweils unterschiedliche zeitlich mit oder ohne Pause nacheinander folgende Zeitabschnitte der den Spektren zugrundeliegenden zeitlichen Messsignale.

Gemäß dem zweiten Prüfschritt g) sieht das erfindungsgemäße Verfahren vor, dass geprüft wird, ob der erste Peak P1 und der zweite Peak P2 jeweils oberhalb ihrer zugehörigen Amplituden-Schwellenwerte A1 und A2 liegen. In Fig. 7 trifft dies für die Spektren, die den ersten Zeitabschnitt repräsentieren, nur für das zweite Spektrum, nicht jedoch für das erste Spektrum zu. Der Höchstwert bzw. die Amplitude des ersten Peaks P1 liegt deutlich unterhalb des ersten Amplituden-Schwellenwertes A1. Insofern ist der Prüfschrift g) in diesem Fall zu verneinen. Das erfindungsgemäße Verfahren sieht für diesen Fall vor, dass die Amplituden-Spektren der Schwingungssignale für das erste Walzgerüst nicht nur für den ersten Zeitabschnitt, sondern auch für einen zweiten und optional auch für einen dritten Zeitabschnitt erstellt werden. Bei einem Vergleich des ersten Amplituden-Spektrums für den Zeitabschnitt 2 mit dem ersten Amplituden-Spektrum für den Zeitabschnitt 1 zeigt sich ein Anstieg der Amplitude des ersten Peaks P1, wenngleich dessen Amplitude immer noch unterhalb des zugehörigen ersten Amplituden-Schwellenwertes A1 liegt. Der erste Peak P1 liegt immer noch zusammen mit dem Peak P2 innerhalb des gemeinsamen Frequenzbereiches 15. Die Amplitude des zweiten Peaks P2 liegt immer noch oberhalb des 2. Amplituden-Schwellenwertes A2. Weil jedoch, wie gesagt, die Amplitude des ersten Peaks P1 immer noch unterhalb des ersten Amplituden-Schwellenwertes A1 liegt, kann in diesem Fall noch kein Ratterereignis sicher detektiert werden. Aufgrund der erkannten Vergrößerung der Amplitude vom ersten Peak P1 im zeitlichen Verlauf (erster Frühindikator), beispielsweise über einen ersten Grenzwert G1, der unterhalb des ersten Amplituden-Schwellenwertes A1 liegt, hinaus, kann jedoch in diesem Fall eine erste Vorwarnung ausgegeben werden, dass das kritische Rattern des Systems eintreten könnte. Das wäre dann der Fall, wenn die Amplitude des ersten Peaks P1 im Laufe der Zeit noch weiter ansteigen würde und irgendwann auch den zugehörigen ersten Amplituden-Schwellenwert A1 übersteigen würde, wie dies in Fig. 7 für den Zeitabschnitt 3 gezeigt ist. Für die Situation, wie sie in Fig. 7 für den dritten Zeitabschnitt 3 gezeigt ist, würde gemäß dem erfindungsgemäßen Verfahren die Detektion des Ratterereignisses ausgegeben bzw. angezeigt werden, weil die Bedingungen gemäß des ersten Prüfschrittes f) und des zweiten Prüfschrittes g) beide erfüllt wären.

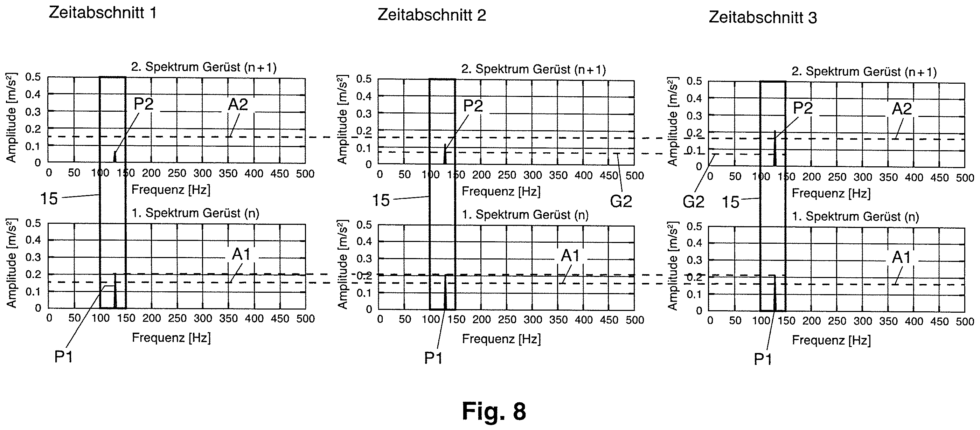

Die Ausgabe der besagten ersten Vorwarnung im Hinblick auf das zukünftige Eintreten des Ratterereignisses kann von dem Erreichen eines ersten Grenzwertes G1 abhängig gemacht werden. Erst wenn dieser erste Grenzwert G1, der nur geringfügig unterhalb des ersten Amplituden-Schwellenwertes A1 liegt, erreicht oder überschritten wird, und wenn aber gleichzeitig die Amplitude des ersten Peaks P1 noch immer unterhalb des ersten Amplituden-Schwellenwertes A1 liegt, dann wird die besagte erste Vorwarnung ausgegeben. Für die Fig. 8 gelten die Ausführungen zur Ausführung Fig. 7 analog. In Fig. 8 wird vorausgesetzt, dass die Amplitude des ersten Peaks P1 in allen drei Zeitabschnitten jeweils oberhalb ihres zugehörigen ersten Amplituden-Schwellenwertes A1 liegt und dass ein Anstieg des zweiten Peaks P2 im Laufe der Zeit zu beobachten ist, zweiter Frühindikator, bis hin zu einem Überschreiten des zweiten Amplituden-Schwellenwertes A2. Auch hier kann das Ausgeben einer ersten Vorwarnung auf ein mögliches Ratterereignis in Zukunft davon abhängig gemacht werden, ob die Amplitude des zweiten Peaks P2 bereits einen zweiten Grenzwert G2, der unterhalb des zweiten Amplituden-Schwellenwertes A2 liegt, überschritten und gleichzeitig aber den zweiten Amplituden-Schwellenwert A2 noch nicht überschritten hat.

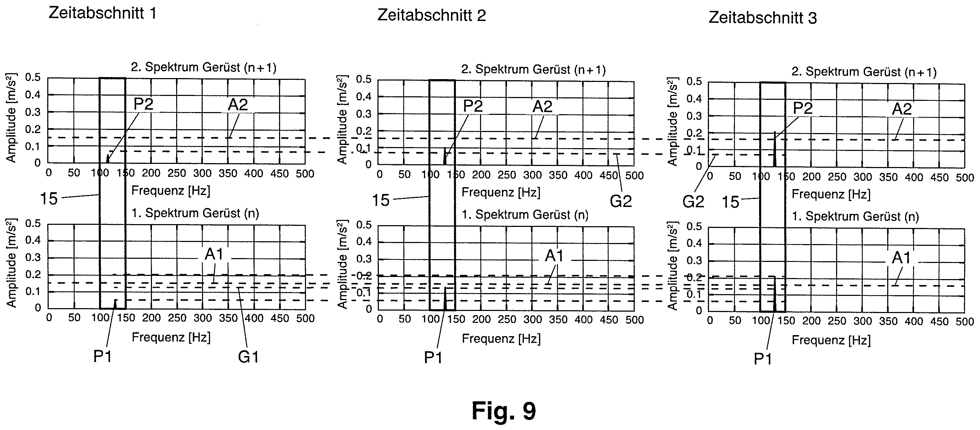

Fig. 9 veranschaulicht ein weiteres Ausführungsbeispiel, bei dem in dem Spektrum für den Zeitabschnitt 1 die Amplitude des ersten Peaks P1 wie auch die Amplitude des zweiten Peaks P2 jeweils noch unter ihren jeweiligen Amplituden-Schwellenwerten A1 und A2 und vorzugsweise auch noch unterhalb ihrer Grenzwerte G1 und G2 liegen. In diesem Fall müssen die Spektren für das erste Walzgerüst n und für das zweite Walzgerüst n+1 ebenfalls wiederum nicht nur für den ersten Zeitabschnitt 1, sondern auch für mindestens einen zweiten Zeitabschnitt 2 ermittelt und miteinander verglichen werden. Gemäß Fig. 9 ist bei den Spektren für den zweiten Zeitabschnitt 2 ein Anstieg in der Amplitude bei sowohl dem ersten Peak P1 wie auch dem zweiten Peak P2 erkennbar, jeweils in Richtung ihrer zugehörigen Amplituden-Schwellenwerte A1 und A2. Insofern kann auch in diesem Fall eine erste Vorwarnung für ein mögliches Ratterereignis in Zukunft ausgegeben werden, das dann eintritt, wenn zukünftig die Amplituden von sowohl dem ersten Peak P1 wie auch dem zweiten Peak P2 jeweils über ihren zugehörigen Amplituden-Schwellenwerten A1 und A2 liegen, wie für den Zeitabschnitt 3 gezeigt.

Mit Bezugnahme auf die Fig. 7 - 9 wurde, wie gesagt, die Entwicklung der Amplituden der Peaks P1 und P2 mit der Zeit untersucht und gegebenenfalls eine erste Vorwarnung ausgesprochen.

Fig. 10 veranschaulicht dagegen die zeitliche Entwicklung der Frequenz eines Peaks, die ebenfalls zur Ausgabe einer (zweiten) Vorwarnung im Hinblick auf das zukünftige mögliche Eintreten eines Ratterereignisses dienen kann. In einer Ausgangssituation zeigt Fig. 10 das erste und das zweite Amplituden-Spektrum jeweils für einen Zeitabschnitt 1. Es ist zu erkennen, dass lediglich der erste Peak P1 innerhalb des gemeinsamen Frequenzbereiches 15 liegt, während der zweite Peak P2 außerhalb des gemeinsamen Frequenzbereiches 15 liegt. Der Frequenzabstand beträgt $\Delta$. Der erste Prüfschritt f) wäre hier nicht erfüllt, weil der erste Peak P1 und der zweite Peak P2 nicht beide innerhalb des gemeinsamen Frequenzbereiches 15 liegen. In diesem Fall kann es empfehlenswert sein, zu prüfen, ob sich die Frequenz des zweiten Peaks P2 im Laufe der Zeit ändert und der Frequenz des ersten Peaks P1 annähert.

Zu diesem Zweck werden das erste Amplituden-Spektrum und das zweite Amplituden-Spektrum zusätzlich zu dem Zeitabschnitt 1 auch für einen zweiten Zeitabschnitt 2 generiert. Ein Vergleich des zweiten Amplituden-Spektrums für den Zeitabschnitt 1 und für den Zeitabschnitt 2 zeigt im Zeitabschnitt 2 eine Verringerung des Frequenzabstandes $\Delta$. Bei unveränderter Frequenz des ersten Peaks in dem ersten Amplituden-Spektrum hat sich der Frequenzabstand in dem zweiten Amplituden-Spektrum nun so weit verringert, dass die Frequenz des zweiten Peaks P2 innerhalb des gemeinsamen Frequenzbereiches 15 liegt. Damit ist der erste Prüfschritt f) erfüllt. Da darüber hinaus sowohl die Amplitude des ersten Peaks wie auch die Amplitude des zweiten Peaks jeweils oberhalb ihrer Amplituden-Schwellenwerte A1 und A2 liegen, ist hier auch der zweite Prüfschritt g) erfüllt; somit liegen die Voraussetzungen für die Detektion des Ratterereignisses vor.

Optional können das erste Amplituden-Spektrum und das zweite Amplituden-Spektrum auch noch für einen dritten Zeitabschnitt 3 betrachtet werden; siehe die beiden rechten übereinander angeordneten Abbildungen in Fig. 10. Wenn in diesem Fall noch zusätzlich festgestellt wird, dass der erste Peak P1 und der zweite Peak P2 nicht nur innerhalb des gemeinsamen Frequenzbereiches 15, sondern auch innerhalb des noch weiteren engeren gemeinsamen Frequenzbereiches 17 liegen, dann deutet dies auf eine wiederum besonders hohe Ähnlichkeit der Spektren hin, deren Vorliegen die Detektion des Ratterereignisses zusätzlich untermauert.

Die Figuren 7-10 zeigen jeweils nur Beispiele für eine zeitliche Entwicklung der Amplituden und/oder der Frequenzen der Peaks hin zu kritischeren Situationen, die das Eintreten eines Ratterereignisses wahrscheinlich werden lassen. Umgekehrt gilt allerdings auch, dass ein Konstantbleiben oder Absinken einer Amplitude eines Peaks oder ein Konstantbleiben oder eine Vergrößerung eines Frequenzabstandes zwischen dem ersten und zweiten Peak im Zeitverlauf die Wahrscheinlichkeit für das Eintreten eines Ratterereignisses nicht verändern oder reduzieren.

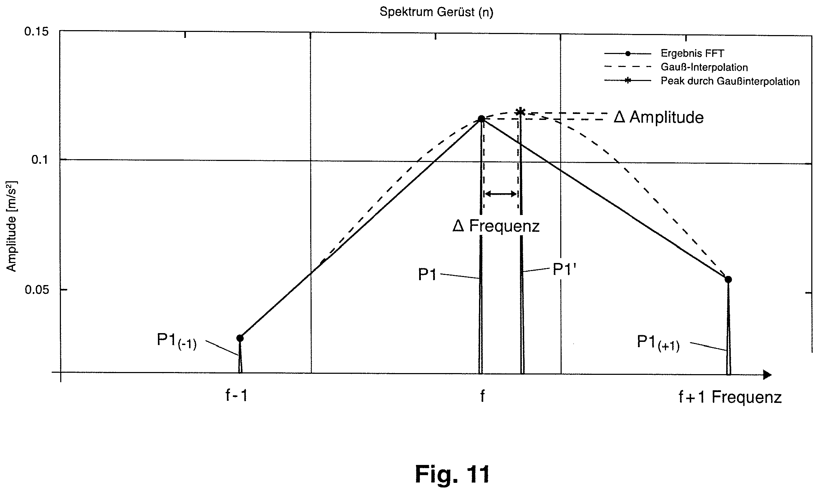

Fig. 11 veranschaulicht eine Methode zur Verbesserung der Auflösung des ersten und/oder zweiten Amplituden-Spektrums. In der Realität besteht das erste und/oder das zweite Amplituden-Spektrum typischerweise nicht nur aus einem einzelnen Peak, wie es in den vorangegangenen Figuren jeweils der Einfachheit halber dargestellt wurde, sondern aus einer Vielzahl von Peaks $P1_{(f-1)}$, P1, $P1_{(f+1)}$, d.h. der erste Peak P1 mit der Frequenz f und/oder der zweite Peak P2 haben typischerweise Nachbarpeaks in ihrer unmittelbaren Frequenz-Umgebung mit leicht geringerer Frequenz $_{f-1}$ und/oder leicht erhöhter Frequenz $_{f+1}$. Eine Interpolation dieser Amplituden-Spektren kann beispielsweise zu einer Änderung bzw. einer Korrektur der Amplitude und/oder der Frequenz des jeweiligen ersten und/oder zweiten Peaks führen, wie dies für den ersten Peak P1 in Figur 11 veranschaulicht ist. Die Amplitude und die Frequenz des ersten interpolierten Peaks P1' gelten als präziser als die Frequenz und die Amplitude des nichtinterpolierten ersten Peaks P1. Daher sieht das erfindungsgemäße Verfahren vor, dass das erste und/oder zweite Amplituden-Spektrum vor der Durchführung eines der Prüf- und/oder eines der Vergleichsschritte vorzugsweise interpoliert werden. Diese Prüf- bzw. Vergleichsschritte werden sodann mit den Amplituden und Frequenzen der interpolierten Peaks P1' durchgeführt; siehe den ersten optionalen Zwischenschritt in Fig. 1.

Die Detektion des Ratterereignisses und/oder zumindest eine der Vorwarnungen für einen zukünftigen Eintritt des Ratterereignisses werden gemäß dem erfindungsgemäßen Verfahren an eine Bedienperson des Systems und/oder an eine automatische Prozesssteuerung des Systems ausgegeben. Mit der Ausgabe dieser Information kann eine Empfehlung verbunden sein, das System abzubremsen, um ein weiteres Aufschaukeln bzw. den Eintritt des Ratterereignisses noch zu verhindern. Das gilt insbesondere dann, wenn zumindest die Frequenz eines der Peaks weniger als ein vorgegebener Frequenzabstand von zumindest einer der Eigenfrequenzen der Walzgerüste entfernt liegt.

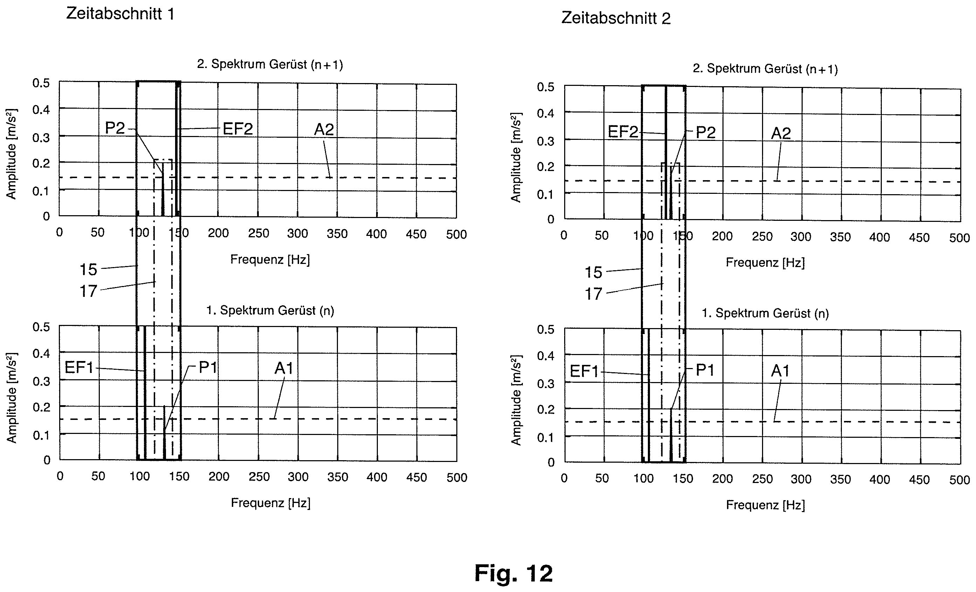

Mögliche Fallkonstellationen zu diesem Thema sind in Fig. 12 dargestellt. Die Abbildung in Fig. 12 links unten zeigt das erste Amplituden-Spektrum für das erste Walzgerüst n für einen ersten Zeitabschnitt 1. Darüber ist das zweite Amplituden-Spektrum für das zweite Walzgerüst n+1 für denselben ersten Zeitabschnitt 1 dargestellt. Zu erkennen ist, dass sowohl der erste Peak P1 des ersten Amplituden-Spektrums wie auch der zweite Peak P2 des zweiten Amplituden-Spektrums jeweils die Bedingungen des ersten Prüfschrittes f) und des zweiten Prüfschrittes g) erfüllen. D.h., die beiden Peaks P1 und P2 liegen beide in dem gemeinsamen Frequenzbereich 15 und ihre Amplituden liegen jeweils über ihren jeweiligen Amplituden-Schwellenwerten A1 und A2. Damit wären gemäß dem erfindungsgemäßen Verfahren eigentlich die Voraussetzungen für die Detektion des Ratterereignisses erfüllt. Das gilt erst recht, weil sowohl der erste Peak P1 wie auch der zweite Peak P2 innerhalb des weiteren gemeinsamen Frequenzbereiches 17 liegen und damit eine noch weitergehende hinreichende Übereinstimmung aufweisen.

Allerdings ist in den beiden Spektren für den Zeitabschnitt 1 auch zu erkennen, dass sowohl eine Eigenfrequenz EF1 des ersten Walzgerüstes n wie auch eine Eigenfrequenz EF2 des zweiten Walzgerüstes n+1 jeweils außerhalb des weiteren bzw. engeren gemeinsamen Frequenzbereichs 17 liegen. Aufgrund dieser Sachlage könnte die grundsätzlich hier erkannte Detektion des Ratterereignisses relativiert und infrage gestellt werden. D.h.: Die Situation könnte als doch nicht so kritisch im Hinblick auf einen Eintritt des Ratterereignisses eingestuft werden, weil die Peaks noch einen ausreichenden Frequenzabstand zu den Eigenfrequenzen EF1 und EF2 der Walzgerüste haben.

Für die rechte Hälfte der Fig. 12 gilt dieselbe Beschreibung wie für die linke Hälfte der Fig. 12 mit folgenden Unterschieden: Die rechts gezeigten Spektren beziehen sich auf einen anderen, zweiten Zeitabschnitt 2 und es ist zu erkennen, dass die Eigenfrequenz EF2 des zweiten Walzgerüstes n+1 hier beispielhaft in den weiteren gemeinsamen Frequenzbereich 17 des ersten und des zweiten Peaks P1 und P2 fällt. In diesem Fall wird die ursprüngliche Detektion des Ratterereignisses bejaht und bestätigt, da die unmittelbare Nähe der Frequenz des zweiten Peaks P2 zu der kritischen Eigenfrequenz EF2 des zweiten Walzgerüstes zu einem unerwünschten Aufschaukeln der Schwingungen bzw. zu unerwünschten Resonanzeffekten führen kann.

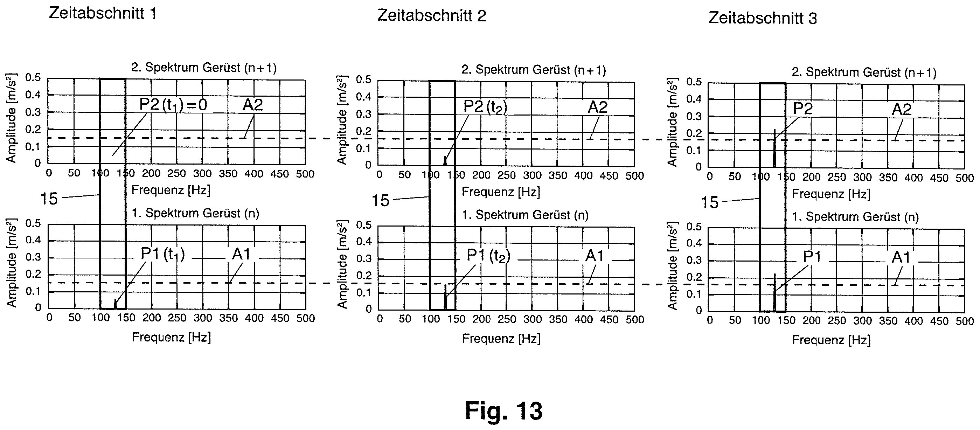

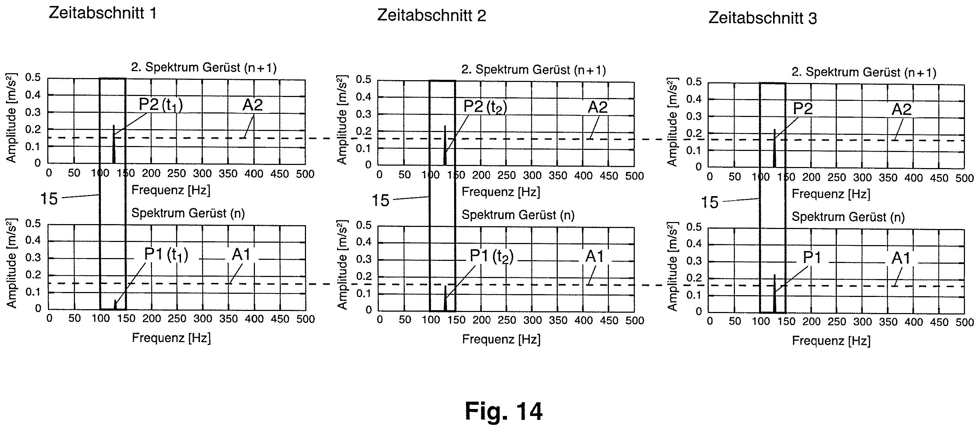

Die Figuren 13 und 14 veranschaulichen jeweils den Amplituden-Gradienten als ein weiteres Kriterium, das neben den beiden Pflicht-Kriterien gemäß den Verfahrensschritten f) und g) - optional auch in Kombination mit einem oder mehreren der anderen zuvor beschriebenen Kriterien - als Indiz für das zukünftige Eintreten eines Ratterereignisses herangezogen waren kann. Konkret wird bei diesem Kriterium geprüft, ob der (zeitliche) Gradient der Amplituden von zwei Peaks in Amplitudenspektren über unterschiedlichen Zeitabschnitten oberhalb eines Gradienten-Schwellenwertes liegt oder nicht.

Anders ausgedrückt: Bei dem Gradienten-Kriterium erfolgt ein Vergleich der Amplituden Pn der Peaks in einem Amplituden-Spektrum zu einem aktuellen Zeitabschnitt ($t=t_2$) mit den Amplituden der Peaks in einem Amplituden-Spektrum aus einem vergangenen Zeitabschnitt ($t=t_1$) bei einer bestimmten, vorgegebenen Zeitdifferenz ($t_2 - t_1 = \Delta t =$ const.) für ein Walzgerüst n. Das ermöglicht eine Gradientenauswertung der Amplituden wie folgt:

$$\text{grad } Pn = (Pn(t_2) - Pn(t_1))/\Delta t \qquad\qquad (1)$$

Falls der so errechnete Gradient oberhalb eines Gradienten-Schwellenwertes Gn liegt, wird dies als zusätzlicher Hinweis auf das mögliche Eintreten eines Ratterereignisses zumindest an dem Walzgerüst n interpretiert; und umgekehrt. Erfindungsgemäß erfolgt dann bei positiver Gradientenauswertung eine Vorwanung an den Bediener oder an die automatische Steuereinrichtung des Walzgerüstes, dass zukünftig eine Amplitudenüberschreitung bei zumindest diesem Walzgerüst zu erwarten ist.

Fig. 13 veranschaulicht die Gradientenauswertung zum einen an dem Walzgerüst n und zum anderen an einem nachgeordneten Walzgerüst n+1. Bei beiden Walzgerüsten liegen die Amplituden der Peaks innerhalb der Zeitabschnitte 1 und 2 hier beispielhaft unterhalb der jeweiligen Amplituden-Schwellenwerte A1 bzw. A2. Die Gradientenauswertung erfolgt für das Walzgerüst n=1 und für das Walzgerüst n+1=2 jeweils gemäß der Formel (1) getrennt. Für beide Walzgerüste liegt der ermittelte Gradient grad P1 und grad P2 jeweils oberhalb der individuell zugeordneten Gradienten-Schwellenwerte G1 bzw. G2 (in Fig. 13 nicht gezeigt). Das lässt erwarten, dass bei einem zukünftigen Zeitabschnitt 3 die Amplituden der Peaks der Amplitudenspektren für beide Walzgerüste oberhalb ihrer individuellen Amplituden-Schwellenwerte A1 bzw. A2 liegen werden. Den Eintritt dieser erwarteten Ereignisse zeigen die rechten Abbildungen in Fig. 13.

Fig. 14 veranschaulicht die Gradientenauswertung beispielhaft nur an dem Walzgerüst n. Für das benachbarte Walzgerüste n+1 wurde hier vereinfachend angenommen, dass die Amplituden der Peaks in den Amplitudenspektren über den Zeitabschnitten 1, 2 und 3 immer über dem zugehörigen Amplituden-Schwellenwert A2 liegen. Deshalb bedarf es hier nur einer Gradientenauswertung an dem Walzgerüst n. Bei dem Walzgerüst n liegen die Amplituden der Peaks innerhalb der Zeitabschnitte 1 und 2 unterhalb des jeweiligen Amplituden-Schwellenwertes A1. Die Gradientenauswertung erfolgt gemäß der Formel (1) für das Walzgerüst n=1. Für das Walzgerüst n liegt der ermittelte Gradient grad P1 oberhalb des Gradienten-Schwellenwertes (in Fig. 14 nicht gezeigt). Das lässt erwarten, dass bei einem zukünftigen Zeitabschnitt 3 auch die Amplitude der Peaks des Amplitudenspektrums für das Walzgerüst n oberhalb des individuellen Amplituden-Schwellenwerts A1 liegen wird. Den Eintritt dieses erwarteten Ereignisses zeigt die rechte untere Abbildung in Fig. 14. Die rechte obere Abbildung in Fig. 14 zeigt, dass die Amplitude des Peaks in dem Amplitudenspektrum für das benachbarte Walzgerüst n+1 auch über dem späteren Zeitabschnitt 3 noch immer über dem Amplituden-Schwellenwert A2 liegt.

Bezugszeichenliste

| | |
|---|---|
| A1 | erster Amplituden-Schwellenwert |
| A2 | zweiter Amplituden-Schwellenwert |
| 15 | gemeinsamer Frequenzbereich |
| 17 | engerer gemeinsamer Frequenzbereich |
| EF1 | Eigenfrequenz des ersten Walzgerüstes |
| EF2 | Eigenfrequenz des zweiten Walzgerüstes |
| G1 | erster Grenzwert |
| G2 | zweiter Grenzwert |
| KO | Korrelations-Schwellenwert |
| n | erstes Walzgerüst |
| $n_{+1}$ | zweites Walzgerüst |
| P1 | erster Peak |
| P1' | erster interpolierter Peak |
| $P1_{(f-1)}$ | Nachbarpeak mit kleinerer Frequenz als P1 |
| $P1_{(f+1)}$ | Nachbarpeak mit größerer Frequenz als P1 |
| P2 | zweiter Peak |
| $\Delta$ | Frequenzdifferenz/Frequenzabstand |
| $t_1$ | Zeitabschnitt 1 |
| $t_2$ | Zeitabschnitt 2 |

**Patentansprüche**

1. Verfahren zum Analysieren des Schwingungsverhaltens von einem System bestehend aus mindestens einem ersten und einem zweiten Walzgerüst, die über ein in beide Walzgerüste eingespanntes Band, insbesondere Metallband, miteinander gekoppelt sind, aufweisend folgende Schritte:

   a) Erfassen der Schwingungen an dem ersten Walzgerüst mit einem ersten Sensor in Form eines ersten zeitlichen Schwingungssignals;
   b) Erfassen der Schwingungen an dem zweiten Walzgerüst mit einem zweiten Sensor in Form eines zweiten zeitlichen Schwingungssignals zeitgleich mit der Erfassung der Schwingungen an dem ersten Walzgerüst;
   c) Transformieren des ersten Schwingungssignals in einem ersten Zeitabschnitt in den Frequenzraum resultierend in ein erstes Amplituden-Spektrum für den ersten Zeitabschnitt;
   **gekennzeichnet durch**
   d) Transformieren des zweiten Schwingungssignals in dem ersten Zeitabschnitt in den Frequenzraum resultierend in ein zweites Amplituden-Spektrum für den ersten Zeitabschnitt;
   e) Festlegen eines gemeinsamen Frequenzbereichs in dem das erste und das zweite Amplituden-Spektrum miteinander verglichen werden;
   f) Prüfen, ob es mindestens einen ersten Peak in dem ersten Amplituden-Spektrum und mindestens einen zweiten Peak in dem zweiten Amplituden-Spektrums gibt, die beide in dem gemeinsamen Frequenzbereich liegen;
   g) Prüfen, ob der erste Peak einen vorgegebenen ersten Amplituden-Schwellenwert (A1) und der zweite Peak einen zweiten vorgegebenen Amplituden-Schwellenwert (A2) überschreitet; und
   h) Detektieren eines Ratterereignisses, wenn die beiden Prüfschritte f) und g) jeweils bejaht werden.

2. Verfahren nach Anspruch 1,

**gekennzeichnet durch** folgende Schritte, wenn der Prüfschritt f) bejaht, aber der Prüfschritt g) verneint wird, weil der erste Peak (P1) unterhalb des ersten Amplituden-Schwellenwertes (A1) liegt:

- Transformieren mindestens eines zweiten Zeitabschnitts des ersten Schwingungssignals in den Frequenzraum resultierend in das erste Amplituden-Spektrum für zumindest den zweiten Zeitabschnitt;
- Vergleichen der Peaks des ersten Amplituden-Spektrums in dem gemeinsamen Frequenzbereich (15) für den ersten und für zumindest den zweiten Zeitabschnitt miteinander dahingehend, ob ein Anstieg der Amplitude des Peaks für den zweiten Zeitabschnitt gegenüber der Amplitude des Peaks für den ersten Zeitabschnitt, vorzugsweise über einen unteren Grenzwert (G1) unterhalb des ersten Amplituden-Schwellenwertes (A1) hinaus, erkennbar ist als erster Frühindikator; und
- Ausgeben einer ersten Vorwarnung, dass das kritische Rattern des Systems eintreten könnte, wenn der erste Frühindikator gegeben ist, und der zweite Peak in dem gemeinsamen Frequenzbereich für zumindest einen der betrachteten Zeitabschnitte, vorzugsweise für alle betrachteten Zeitabschnitte oberhalb des zweiten Amplituden-Schwellenwertes (A2) liegt.

3. Verfahren nach einem der vorangegangenen Ansprüche,
**gekennzeichnet durch** folgende Schritte, wenn der Prüfschritt f) bejaht, aber der Prüfschritt g) verneint wird, weil der zweite Peak (P2) unterhalb des zweiten Amplituden-Schwellenwertes (A2) liegt:

- Transformieren mindestens eines zweiten Zeitabschnitts des zweiten Schwingungssignals in den Frequenzraum resultierend in das zweite Amplituden-Spektrum für zumindest den zweiten Zeitabschnitt;
- Vergleichen der Peaks (P2) des zweiten Amplituden-Spektrums in dem gemeinsamen Frequenzbereich (15) für den ersten und für zumindest den zweiten Zeitabschnitt miteinander dahingehend, ob ein Anstieg der Amplitude des Peaks (P2) für den zweiten Zeitabschnitt gegenüber der Amplitude des Peaks (P2) für den ersten Zeitabschnitt, vorzugsweise über einen unteren Grenzwert (G2) unterhalb des zweiten Amplituden-Schwellenwertes (A2) hinaus erkennbar ist als zweiter Frühindikator; und
- Ausgeben einer ersten Vorwarnung, dass das kritische Rattern des Systems eintreten könnte, wenn der zweite Frühindikator gegeben ist, und der erste Peak in dem gemeinsamen Frequenzbereich für zumindest einen der betrachteten Zeitabschnitte, vorzugsweise für alle betrachteten Zeitabschnitte oberhalb des ersten Amplituden-Schwellenwertes liegt (A1).

4. Verfahren nach Anspruch 2 und 3,
**gekennzeichnet durch** folgende Schritte, wenn der Prüfschritt f) bejaht, aber der Prüfschritt g) verneint wird, weil der erste Peak (P1) unterhalb des ersten Amplituden-Schwellenwertes (A1) und der zweite Peak (P2) unterhalb des zweiten Amplituden-Schwellenwertes (A2) liegt:

- Durchführen der beiden Transformationsschritte und der beiden Vergleichsschritte nach Anspruch 2 und Anspruch 3; und
- Ausgeben einer ersten Vorwarnung, dass das kritische Rattern des Systems eintreten könnte, wenn in beiden Vergleichsschritten jeweils der Frühindikator gegeben ist.

5. Verfahren nach einem der vorangegangenen Ansprüche,
**gekennzeichnet durch** folgende Schritte, wenn der Prüfschritt f) verneint wird, weil der erste Peak (P1) und/oder der zweite Peak (P2) außerhalb des gemeinsamen Frequenzbereiches (15) liegen:

- Transformieren mindestens eines zweiten Zeitabschnitts des mindestens einen betreffenden Schwingungssignals in den Frequenzraum resultierend in das betreffende Amplituden-Spektrum für zumindest den zweiten Zeitabschnitt;
- Vergleichen der Peaks ( des betreffenden Amplituden-Spektrums in dem gemeinsamen Frequenzbereich (15) für das erste und für zumindest den zweiten Zeitabschnitt miteinander dahingehend, ob eine Verschiebung der Frequenz des Peaks für den zweiten Zeitabschnitt gegenüber der Frequenz des Peaks für den ersten Zeitabschnitt in zumindest in eine definierte Umgebung um den gemeinsamen Frequenzbereich (15) stattgefunden hat; und
- Ausgeben einer zweiten Vorwarnung, dass das kritische Rattern des Systems eintreten könnte, wenn die Frequenz des betreffenden Peaks in die Umgebung des gemeinsamen Frequenzbereichs (15) eingelaufen ist, und wenn zusätzlich der Prüfschritt g) zu bejahen ist.

6. Verfahren nach einem der vorangegangenen Ansprüche,

**dadurch gekennzeichnet,**

**dass** die Detektion des Ratterereignisses oder die Ausgabe der ersten oder der zweiten Vorwarnung nur dann erfolgt, wenn zusätzlich:

- die Korrelation der beiden Signale im Zeitabschnitt oberhalb des Korrelations-Schwellenwertes (KO) liegt; und/oder
- die Eigenfrequenzen des ersten (EF1) und/oder des zweiten Walzgerüstes (EF2) innerhalb des gemeinsamen Frequenzbereichs (15) und vorzugsweise auch innerhalb des weiteren (engeren) gemeinsamen Frequenzbereiches (17) liegen; und/oder
- die Frequenz des ersten Peaks (P1) und die Frequenz des zweiten Peaks (P2) innerhalb eines weiteren gemeinsamen Frequenzbereichs (17) liegen, der enger als der gemeinsame Frequenzbereich (15) ist; und/oder
- ein Amplituden-Gradient, ermittelt gemäß der Formel

$$\text{grad } Pn = (Pn(t_2) - Pn(t_1))/\Delta t \qquad\qquad (1)$$

für das erste Walzgerüst n=1 oberhalb eines individuellen Gradienten-Schwellenwertes (G1) liegt, wobei gilt:

n Walzgerüst
t1, t2 Zeitabschnitt 1, Zeitabschnitt 2
$\Delta$t Zeitdifferenz t2-t1 = const.
Pn Amplitude des Peaks für das Walzgerüst n1

und entweder die Amplitude der Peaks des Amplitudenspektrums des zweiten Walzgerüstes (P2) bereits während der Zeitabschnitte 1, 2 und 3 über dem zugehörigen Amplituden-Schwellenwert (A2) gelegen haben oder liegen, oder auch der Gradient für das zweite Walzgerüst gemäß der Formel (1) ebenfalls oberhalb eines individuellen Gradienten-Schwellenwertes (G2) liegt.

7. Verfahren nach einem der vorangegangenen Ansprüche,
**dadurch gekennzeichnet,**
**dass** das erste und/oder das zweite Amplituden-Spektrum vor der Durchführung eines der Prüf- und/oder eines der Vergleichsschritte im Frequenzbereich interpoliert wird.

8. Verfahren nach einem der vorangegangenen Ansprüche,
**dadurch gekennzeichnet,**
**dass** die Detektion des Ratterereignisses und/oder zumindest eine der Vorwarnungen an eine Bedienperson des Systems oder eine automatische Prozesssteuerung des Systems ausgeben wird, beispielsweise mit der Empfehlung, das System abzubremsen, insbesondere, wenn zumindest die Frequenz eines der Peaks weniger als ein vorgegebener Frequenzabstand von zumindest einer der Eigenfrequenzen der Walzgerüste beabstandet ist.

9. Verfahren nach einem der vorangegangenen Ansprüche,
**dadurch gekennzeichnet,**
**dass** es sich bei dem ersten und dem zweiten Walzgerüst jeweils um ein Kaltwalzgerüst handelt.

10. Computerprogrammprodukt, das direkt in den internen Speicher eines digitalen Computers geladen werden kann und Softwarecodeabschnitte umfasst, mit denen die Schritte gemäß zumindest einem der vorangegangenen Verfahrensansprüche ausgeführt werden, wenn das Produkt auf dem Computer abläuft.

**Claims**

1. Method of analysing the vibration behaviour of a system consisting of at least one first roll stand and at least one second roll stand, which are coupled together by way of a strip, particularly a metal strip, clamped in place in the two roll stands, comprising the following steps:

a) detecting the vibrations at the first roll stand by a first sensor in the form of a first vibration signal over time;

b) detecting the vibrations at the second roll stand by a second sensor in the form of a second vibration signal over time simultaneously with detection of the vibrations of the first roll stand;

c) transforming the first vibration signal in a first time segment into the frequency domain, resulting in a first amplitude spectrum for the first time segment;

**characterised by**

d) transforming the second vibration signal in the first time segment into the frequency domain, resulting in a second amplitude spectrum for the first time segment;

e) determining a common frequency range in which the first amplitude spectrum and the second amplitude spectrum are compared with one another;

f) checking whether there are at least one first peak in the first amplitude spectrum and at least one second peak in the second amplitude spectrum which both lie in the common frequency range;

g) checking whether the first peak exceeds a predetermined first amplitude threshold value (A1) and the second peak exceeds a second predetermined amplitude threshold value (A2); and

h) detecting occurrence of a chatter event if the two checking steps f) and g) are each answered in the affirmative.

2. Method according to claim 1,
   **characterised by** the following steps if the checking step f) is answered in the affirmative, but the checking step g) answered in the negative because the first peak (P1) lies below the first amplitude threshold value (A1):

   - transforming at least one second time segment of the first vibration signal into the frequency domain, resulting in the first amplitude spectrum for at least the second time segment;
   - comparing the peaks of the first amplitude spectrum in the common frequency range (15) for the first time segment and for at least the second time segment with one another with regard to whether a rise in the amplitude of the peak for the second time segment by comparison with the amplitude of the peak of the first time segment, preferably above a lower limit value (G1) below the first amplitude threshold value (A1), is recognisable as first early indicator; and
   - issuing a first advance warning that critical chatter of the system could arise if the first early indicator is given and the second peak in the common frequency range for at least one of the considered time segments, preferably for all considered time segments, lies above the second amplitude threshold value (A2).

3. Method according to any one of the preceding claims,
   **characterised by** the following steps if the checking step f) is answered in the affirmative, but the checking step g) is answered in the negative because the second peak (P2) lies below the second amplitude threshold value (A2);

   - transforming at least one second time segment of the second vibration signal into the frequency domain, resulting in the second amplitude spectrum for at least the second time segment;
   - comparing the peaks (P2) of the second amplitude spectrum in the common frequency range (15) for the first time segment and for at least the second time segment with one another with regard to whether a rise in the amplitude of the peak (P2) for the second time segment by comparison with the amplitude of the peak (P2) for the first time segment, preferably above a lower limit value (G2) below the second amplitude threshold value (A2), is recognisable as second early indicator; and
   - issuing a first advance warning that critical chatter of the system could rise if the second early indicator is given and the first peak in the common frequency range for at least one of the considered time segments, preferably for all of the considered time segments, lies above the first amplitude threshold value (A1).

4. Method according to claim 2 and 3,
   **characterised by** the following steps if the checking step f) is answered in the affirmative, but the checking step g) is answered in the negative because the first peak (P1) lies below the first amplitude threshold value (A1) and the second peak (P2) below the second amplitude threshold value (A2);

   - carrying out the two transformation steps and the two comparison steps according to claim 2 and claim 3; and
   - issuing a first advance warning that critical chatter of the system could arise if the early indicator is given in each of the two comparison steps.

5. Method according to any one of the preceding claims,
   **characterised by** the following steps if the checking step f) is answered in the negative because the first peak (P1) and/or the second peak (P2) lies or lie outside the common frequency range (15):

- transforming at least one second time segment of the at least one relevant vibration signal into the frequency domain, resulting in the relevant amplitude spectrum for at least the second time segment;
- comparing the peaks of the relevant amplitude spectrum in the common frequency range (15) for the first time segment and for at least the second time segment with one another with regard to whether a displacement of the frequency of the peak for the second time segment by comparison with the frequency of the peak for the first time segment has taken place in a defined area around the common frequency range (15); and
- issuing a second advance warning that critical chatter of the system could arise if the frequency of the relevant peak has run into the area of the common frequency range (15) and if in addition the checking step g) is answered in the affirmative.

6. Method according to any one of the preceding claims,

   **characterised in that** detection of the chatter event or issue of the first or second advance warning takes place only if in addition:

   - the correlation of the two signals in the time segment lies above the correlation threshold value (KO); and/or
   - the natural frequencies of the first roll stand (EF1) and/or the second roll stand (EF2) lie within the common frequency range (15) and preferably also within the further (narrower) common frequency range (17); and/or
   - the frequency of the first peak (P1) and the frequency of the second peak (P2) lie within a further common frequency range (17) which is narrower than the common frequency range (15); and/or
   - an amplitude gradient determined in accordance with the equation

$$\text{grad } Pn = (Pn(t_2) - Pn(t_1))/\Delta t \qquad (1)$$

   for the first roll stand n = 1 lies above an individual gradient threshold value (G1), wherein:

   n roll stand
   $t_1$, $t_2$ time segment 1, time segment 2
   $\Delta t$ time difference $t_2 - t_1$ = const.
   Pn amplitude of the peak for the roll stand n1

   and either the amplitude of the peaks of the amplitude spectrum of the second roll stand (P2) was positioned or lies above the associated amplitude threshold value (A2) already during the time segments 1, 2 and 3 or the gradient for the second roll stand according to the equation (1) also lies above an individual gradient threshold value (G2).

7. Method according to any one of the preceding claims,
   **characterised in that** the first and/or the second amplitude spectrum before carrying out one of the checking steps and/or one of the comparison steps is or are interpolated into the frequency range.

8. Method according to any one of the preceding claims,
   **characterised in that** detection of the chatter event and/or at least one of the advance warnings is issued to an operator of the system or an automatic process control of the system, for example with the recommendation to slow down the system particularly if at least the frequency of one of the peaks is separated from at least one of the natural frequencies of the roll stands by less than a predetermined frequency separation.

9. Method according to any one of the preceding claims,
   **characterised in that** each of the first roll stand and the second roll stand is a cold-rolling stand.

10. Computer program product which can be downloaded directly into the internal memory of a digital computer and comprises software code segments by which the steps in accordance with at least one of the preceding method claims are executed when the product is run on the computer.

**Revendications**

1. Procédé d'analyse du comportement vibratoire d'un système constitué d'au moins une première et une deuxième cage de laminage, qui sont couplées l'une à l'autre par l'intermédiaire d'une bande, en particulier une bande

**EP 4 599 219 B1**

métallique, serrée dans les deux cages de laminage, présentant les étapes suivantes :

a) acquisition des vibrations au niveau de la première cage de laminage avec un premier capteur sous la forme d'un premier signal de vibration temporel ;

b) acquisition des vibrations au niveau de la deuxième cage de laminage avec un deuxième capteur sous la forme d'un deuxième signal de vibration temporel simultanément à l'acquisition des vibrations au niveau de la première cage de laminage ;

c) transformation du premier signal de vibration dans un premier intervalle de temps vers le domaine fréquentiel, résultant en un premier spectre d'amplitude pour le premier intervalle de temps ;

**caractérisé par**

d) transformation du deuxième signal de vibration dans le premier intervalle de temps vers le domaine fréquentiel, résultant en un deuxième spectre d'amplitude pour le premier intervalle de temps ;

e) définition d'une plage de fréquences commune dans laquelle le premier et le deuxième spectre d'amplitude sont comparés l'un à l'autre ;

f) vérification s'il existe au moins un premier pic dans le premier spectre d'amplitude et au moins un deuxième pic dans le deuxième spectre d'amplitude, qui se situent tous deux dans la plage de fréquences commune ;

g) vérification si le premier pic dépasse une première valeur de seuil d'amplitude (A1) prédéfinie et si le deuxième pic dépasse une deuxième valeur de seuil d'amplitude (A2) prédéfinie ; et

h) détection d'un événement de broutage si les deux étapes de vérification f) et g) sont chacune confirmées.

2. Procédé selon la revendication 1,
**caractérisé par** les étapes suivantes, si l'étape de vérification f) est confirmée, mais l'étape de vérification g) est infirmée parce que le premier pic (P1) se situe au-dessous de la première valeur de seuil d'amplitude (A1) :

- transformation d'au moins un deuxième intervalle de temps du premier signal de vibration vers le domaine fréquentiel, résultant en le premier spectre d'amplitude pour au moins le deuxième intervalle de temps ;
- comparaison des pics du premier spectre d'amplitude dans la plage de fréquences commune (15) pour le premier et pour au moins le deuxième intervalle de temps l'un avec l'autre afin de déterminer si une augmentation de l'amplitude du pic pour le deuxième intervalle de temps par rapport à l'amplitude du pic pour le premier intervalle de temps, de préférence au-delà d'une valeur limite inférieure (G1) au-dessous de la première valeur de seuil d'amplitude (A1), est identifiable en tant que premier indicateur précoce ; et
- émission d'un premier préavertissement selon lequel le broutage critique du système pourrait survenir si le premier indicateur précoce est présent, et si le deuxième pic dans la plage de fréquences commune pour au moins l'un des intervalles de temps considérés, de préférence pour tous les intervalles de temps considérés, se situe au-dessus de la deuxième valeur de seuil d'amplitude (A2).

3. Procédé selon l'une des revendications précédentes, **caractérisé par** les étapes suivantes, si l'étape de vérification f) est confirmée, mais l'étape de vérification g) est infirmée parce que le deuxième pic (P2) se situe au-dessous de la deuxième valeur de seuil d'amplitude (A2) :

- transformation d'au moins un deuxième intervalle de temps du deuxième signal de vibration vers le domaine fréquentiel, résultant en le deuxième spectre d'amplitude pour au moins le deuxième intervalle de temps ;
- comparaison des pics (P2) du deuxième spectre d'amplitude dans la plage de fréquences commune (15) pour le premier et pour au moins le deuxième intervalle de temps l'un avec l'autre afin de déterminer si une augmentation de l'amplitude du pic (P2) pour le deuxième intervalle de temps par rapport à l'amplitude du pic (P2) pour le premier intervalle de temps, de préférence au-delà d'une valeur limite inférieure (G2) au-dessous de la deuxième valeur de seuil d'amplitude (A2), est identifiable en tant que deuxième indicateur précoce ; et
- émission d'un premier préavertissement selon lequel le broutage critique du système pourrait survenir si le deuxième indicateur précoce est présent, et si le premier pic dans la plage de fréquences commune pour au moins l'un des intervalles de temps considérés, de préférence pour tous les intervalles de temps considérés, se situe au-dessus de la première valeur de seuil d'amplitude (A1).

4. Procédé selon les revendications 2 et 3,
**caractérisé par** les étapes suivantes, si l'étape de vérification f) est confirmée, mais l'étape de vérification g) est infirmée parce que le premier pic (P1) se situe au-dessous de la première valeur de seuil d'amplitude (A1) et le deuxième pic (P2) se situe au-dessous de la deuxième valeur de seuil d'amplitude (A2) :

- exécution des deux étapes de transformation et des deux étapes de comparaison selon la revendication 2 et la revendication 3 ; et

- émission d'un premier préavertissement selon lequel le broutage critique du système pourrait survenir si l'indicateur précoce est présent dans chacune des deux étapes de comparaison.

5. Procédé selon l'une des revendications précédentes, **caractérisé par** les étapes suivantes, si l'étape de vérification f) est infirmée parce que le premier pic (P1) et/ou le deuxième pic (P2) se situent en dehors de la plage de fréquences commune (15) :

- transformation d'au moins un deuxième intervalle de temps de l'au moins un signal de vibration concerné vers le domaine fréquentiel, résultant en le spectre d'amplitude concerné pour au moins le deuxième intervalle de temps;
- comparaison des pics du spectre d'amplitude concerné dans la plage de fréquences commune (15) pour le premier et pour au moins le deuxième intervalle de temps l'un avec l'autre afin de déterminer si un décalage de la fréquence du pic pour le deuxième intervalle de temps par rapport à la fréquence du pic pour le premier intervalle de temps s'est produit au moins dans un voisinage défini autour de la plage de fréquences commune (15) ; et
- émission d'un deuxième préavertissement selon lequel le broutage critique du système pourrait survenir si la fréquence du pic concerné est entrée dans le voisinage de la plage de fréquences commune (15), et si en outre l'étape de vérification g) doit être confirmée.

6. Procédé selon l'une des revendications précédentes, **caractérisé en ce que**

la détection de l'événement de broutage ou l'émission du premier ou du deuxième préavertissement n'a lieu que si, en plus :

- la corrélation des deux signaux dans l'intervalle de temps se situe au-dessus de la valeur de seuil de corrélation (KO) ; et/ou
- les fréquences propres de la première (EF1) et/ou de la deuxième cage de laminage (EF2) se situent à l'intérieur de la plage de fréquences commune (15) et de préférence également à l'intérieur de la plage de fréquences commune supplémentaire (plus étroite) (17) ; et/ou
- la fréquence du premier pic (P1) et la fréquence du deuxième pic (P2) se situent à l'intérieur d'une plage de fréquences commune supplémentaire (17) qui est plus étroite que la plage de fréquences commune (15) ; et/ou
- un gradient d'amplitude, déterminé selon la formule

$$\text{grad } Pn = \big(Pn(t_2) - Pn(t_1)\big)/\Delta t \quad (1)$$

pour la première cage de laminage n=1 se situe au-dessus d'une valeur de seuil de gradient individuelle (G1), où s'appliquent :

n cage de laminage
t1, t2 intervalle de temps 1, intervalle de temps 2
$\Delta t$ différence de temps t2 - t1 = const.
Pn amplitude du pic pour la cage de laminage n1
et soit l'amplitude des pics du spectre d'amplitude de la deuxième cage de laminage (P2) s'est déjà située ou se situe au-dessus de la valeur de seuil d'amplitude (A2) associée pendant les intervalles de temps 1, 2 et 3, soit le gradient pour la deuxième cage de laminage selon la formule (1) se situe également au-dessus d'une valeur de seuil de gradient individuelle (G2).

7. Procédé selon l'une des revendications précédentes, **caractérisé en ce que** le premier et/ou le deuxième spectre d'amplitude est interpolé dans le domaine fréquentiel avant l'exécution de l'une des étapes de vérification et/ou de l'une des étapes de comparaison.

8. Procédé selon l'une des revendications précédentes, **caractérisé en ce que** la détection de l'événement de broutage et/ou au moins l'un des préavertissements est émis à l'attention d'un opérateur du système ou d'une commande de processus automatique du système, par exemple avec la recommandation de ralentir le système, en particulier si au moins la fréquence de l'un des pics est espacée de moins d'une distance de fréquence prédéfinie par rapport à au moins l'une des fréquences propres des cages de laminage.

9. Procédé selon l'une des revendications précédentes,
   **caractérisé en ce que**
   la première et la deuxième cage de laminage sont chacune une cage de laminage à froid.

10. Produit programme informatique, qui peut être chargé directement dans la mémoire interne d'un ordinateur numérique et comprend des portions de code logiciel avec lesquelles les étapes selon au moins l'une des revendications de procédé précédentes sont exécutées lorsque le produit fonctionne sur l'ordinateur.

Analyse von Systemschwingungen

↓

Signalerfassung im Zeitabschnitt (Schritte a) + b))

↓

Transformation in den Frequenzbereich (Schritte c) + d))

↓

optional: Maßnahmen zur Verbesserung
der Auflösung der Spektren

↓

Festlegung eines gemeinsamen Frequenzbereiches (Schritte e))

↓

Prüfen,
ob 1. Peak + 2. Peak
in gemeinsamen
Frequenzbereich
(Schritt f))

Nein →

Ausgabe einer
zweiten Warnung

Ja ↓

Prüfen,
ob 1. Peak + 2. Peak
≥ Amplitudenschwellenwerte (Schritt g))

Nein →

Ausgabe einer
ersten Warnung,
je nach Einzelfall

Ja ↓

optional: Prüfen von zusätzlichen
Ähnlichkeitsbedingungen für 1. + 2.
Amplitudenspektrum

↓

Detektion + Anzeige
von Ratterereignis

# Fig. 1

Fig. 2

EP 4 599 219 B1

Fig. 4

Fig. 3

Fig. 6

Fig. 5

Zeitabschnitt 1

Zeitabschnitt 2

Zeitabschnitt 3

**Fig. 7**

Zeitabschnitt 1

Zeitabschnitt 2

Zeitabschnitt 3

2. Spektrum Gerüst (n + 1)

2. Spektrum Gerüst (n + 1)

2. Spektrum Gerüst (n + 1)

P2    A2

P2    A2

P2    A2

15

15    G2

G2    15

1. Spektrum Gerüst (n)

1. Spektrum Gerüst (n)

1. Spektrum Gerüst (n)

A1

A1

A1

P1

P1

P1

**Fig. 8**

Fig. 9

Fig. 10

**Fig. 11**

Fig. 12

Fig. 13

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3903953 A1

**In der Beschreibung aufgeführte Nicht-Patentliteratur**

- **NIROOMAND MOHAMMAD REZA et al.** *811. Frequency analysis of chatter vibrations in tandem rolling mills*, 14 May 2012, 852-865, https://core.ac.uk/download/pdf/323313225.pdf

- Analysis of Causes and Remedy of Chattering in the Aluminum Four stand Tandem Cold Rolling Mill: A Case Study. **VAIDYA VIVEK ANIL et al.** JOURNAL OF THE INSTITUTION OF ENGINEERS (INDIA): SERIES C. SPRINGER INDIA, 23 September 2021, vol. 103, 107-119